# EUROPEAN PATENT APPLICATION

(11) **EP 4 647 192 A1**
(43) Date of publication of application: **12.11.2025**
(21) Application number: 25170479.7
(22) Date of filing: 14.04.2025
(51) Int. Cl.: B22F 10/28, B22F 12/30, B29C 64/153, B29C 64/245, B33Y 10/00, B33Y 40/00

(54) **BUILD PLATFORM FOR ADDITIVE MANUFACTURING AND RELATED METHOD**

(30) Priority: 08.05.2024 US 202418658035
(71) Applicant: GE Vernova Technology GmbH, 5400 Baden (CH)
(72) Inventor: LIU, Shan, Greenville, 29615 (US); KOTTILINGAM, Srikanth Chandrudu, Greenville, 29615 (US); DOZIER, Evan John, Greenville, 29615 (US); SWANNER, JR., Archie Lee, Greenville, 29615 (US); MURRAY, James Joseph, Greenville, 29615 (US)
(74) Representative: Rüger Abel Patentanwälte PartGmbB

(57) **Abstract**

A build platform for a metal additive manufacturing process and a related method are disclosed. The build platform includes a base including a first metal and an upper surface. The build platform also includes a surface layer on the upper surface of the base including a second metal different than the first metal. The surface layer has a graded porosity having a most-dense region at an upper surface of the surface layer and a least-dense region at a lower surface of the surface layer. The lower surface of the surface layer contacts the upper surface of the base.

## Description

### TECHNICAL FIELD

The disclosure relates generally to additive manufacturing, and more specifically, to a build platform for additive manufacturing and a related method.

### BACKGROUND

Additive manufacturing has emerged as a reliable manufacturing method for making three-dimensional (3D) parts. Certain additive manufacturing methods use lasers or electron beams to sequentially sinter metal layers to form a 3D part. Where lasers are used, the process may be referenced as, for example, direct metal laser melting (DMLM) or selective laser melting (SLM), and where electron beams are used, the process may be referenced as, for example, electron beam melting (EBM). Either additive manufacturing process uses a metal powder bed that supplies metal powder layers onto a build platform as the base for the 3D printed parts. The metal powder layers are sintered or melted together by the lasers or electron beams. The build platforms are typically made of a form of steel, stainless steel or nickel-based alloy(s) in any form configured to accommodate the powder material being used to form the 3D part, which is referred to as print material. The selection of build platform material depends on the compatibility with the print material. Notably, the ability of the print material to wet and bond (weld) to the build platform is advantageous. Where the print material does not bond (weld) well to the build platform, it can result in peeling/cracking at the interface resulting in a build failure of the 3D part. Coefficient of thermal expansion (CTE) compatibility of the build platform to the print material is another characteristic to be considered. Significant differences in CTE can result in separation of the bond between the print material and the build platform resulting in a build failure. CTE issues are especially challenging in relatively high temperature additive manufacturing environments, e.g., temperatures higher than 150°C (~302°F).

To address these challenges, build platforms are made entirely from material that is compatible with the print material. For applications that require stainless steel and nickel-based alloys for the 3D part, this approach results in significant initial costs and operating costs. Another approach uses lower cost materials, such as certain types of steel for the build platform, which are inexpensive and easy to machine. However, these materials are frequently incompatible with many, more advanced print materials, e.g., nickel-based alloys, superalloys, etc., for the reasons stated above.

### BRIEF DESCRIPTION

All aspects, examples and features mentioned below can be combined in any technically possible way.

An aspect of the disclosure includes a build platform for a metal additive manufacturing process, the build platform comprising: a base including a first metal and an upper surface; and a surface layer on the upper surface of the base, the surface layer including a second metal different than the first metal, wherein the surface layer has a graded porosity having a most-dense region at an upper surface of the surface layer and a least-dense region at a lower surface of the surface layer, the lower surface of the surface layer contacting the upper surface of the base.

Another aspect of the disclosure includes any of the preceding aspects, and the surface layer has a thickness of at least 0.2 millimeters.

Another aspect of the disclosure includes any of the preceding aspects, and the surface layer covers the upper surface of the base except at an exposed portion of the upper surface surrounding the surface layer, the exposed portion having a width in a range of 1.2 to 1.8 millimeters.

Another aspect of the disclosure includes any of the preceding aspects, and the most-dense region has a porosity in a range of 0% to 4.9% and the least-dense region has a porosity in a range of 5% to 25%.

Another aspect of the disclosure includes any of the preceding aspects, and the first metal includes a single chemical element or an alloy and the second metal includes a different alloy of two or more chemical elements.

Another aspect of the disclosure includes any of the preceding aspects, and the graded porosity between the upper surface of the surface layer and the lower surface of the surface layer includes a constant rate of porosity change from the upper surface of the surface layer to the lower surface of the surface layer in a range of 0.5% to 4% per millimeter.

Another aspect of the disclosure includes any of the preceding aspects, and the graded porosity between the upper surface of the surface layer and the lower surface of the surface layer includes a plurality of stepped-porosity layers having pores of stepped, different volumes from the upper surface of the surface layer to the lower surface of the surface layer, wherein the pores have diameter in a range of 0.028 to 0.036 millimeters (mm) below the upper surface of the surface layer and in a range of 1.8 to 2.2 mm adjacent the lower surface of the surface layer.

Another aspect of the disclosure includes any of the preceding aspects, and the graded porosity between the upper surface of the surface layer and the lower surface of the surface layer includes a plurality of open columns in solid material, the plurality of open columns extending from the upper surface of the surface layer to the lower surface of the surface layer, wherein each open column as a narrower upper portion adjacent but under the upper surface of the surface layer and a wider lower portion adjacent the lower surface of the surface layer.

Another aspect of the disclosure includes any of the preceding aspects, and each open column has a lower width at the lower surface of the surface layer in a range of 0.5-2.0 millimeters (mm), an upper width below the upper surface of the surface layer in a range of 0.05 to 0.3 mm, and a taper angle in a range of 1-4°.

Another aspect of the disclosure includes any of the preceding aspects, and further comprising a fillet coupling the surface layer to the base, the fillet including the second metal.

Another aspect of the disclosure includes a method, comprising: forming a build platform for an additive manufacturing process by: providing a base including a first metal and an upper surface; and forming a surface layer on the upper surface of the base, the surface layer including a second metal different than the first metal, wherein the surface layer has a graded porosity having a most-dense region at an upper surface of the surface layer and a least-dense region at a lower surface of the surface layer, the lower surface of the surface layer contacting the upper surface of the base, wherein the surface layer has a thickness of at least 0.2 millimeters.

Another aspect of the disclosure includes any of the preceding aspects, and forming the surface layer includes forming a solid layer apart from the base, forming the graded porosity in the solid layer to form the surface layer, and coupling the surface layer to the upper surface of the base.

Another aspect of the disclosure includes any of the preceding aspects, and the coupling includes brazing, friction welding or fillet welding, around a perimeter of the surface layer..

Another aspect of the disclosure includes any of the preceding aspects, and forming the surface layer includes forming a solid layer on the upper surface of the base and forming the graded porosity in the solid layer to form the surface layer.

Another aspect of the disclosure includes any of the preceding aspects, and forming the graded porosity includes at least one of electric discharge machining (EDM), electrochemical machining (ECM) and shaped tube electric machining (STEM), the solid layer.

Another aspect of the disclosure includes any of the preceding aspects, and forming the surface layer includes second metal powder bed additive manufacturing the surface layer on the upper surface of the base.

Another aspect of the disclosure includes any of the preceding aspects, and the first metal includes a single chemical element or an alloy and the second metal includes a different alloy of two or more chemical elements.

Another aspect of the disclosure includes any of the preceding aspects, and the graded porosity between the upper surface of the surface layer and the lower surface of the surface layer includes a constant rate of porosity change from the upper surface of the surface layer to the lower surface of the surface layer in a range of 1% to 4% per millimeter.

Another aspect of the disclosure includes any of the preceding aspects, and the graded porosity between the upper surface of the surface layer and the lower surface of the surface layer includes a plurality of layers having pores of stepped, different volumes from the upper surface of the surface layer to the lower surface of the surface layer, wherein the pores have diameter in a range of 0.028 to 0.036 millimeters (mm) below the upper surface of the surface layer and in a range of 1.8 to 2.2 mm adjacent the lower surface of the surface layer.

Another aspect of the disclosure includes any of the preceding aspects, and the graded porosity between the upper surface of the surface layer and the lower surface of the surface layer includes a plurality of open columns in solid material, the plurality of open columns extending from the upper surface of the surface layer to the lower surface of the surface layer, wherein each open column as a narrower upper portion adjacent but under the upper surface of the surface layer and a wider lower portion adjacent the lower surface of the surface layer, wherein each open column has a lower width at the lower surface of the surface layer in a range of 0.5-2.0 millimeters (mm), an upper width below the upper surface of the surface layer in a range of 0.05 to 0.3 mm, and a taper angle in a range of 1-4°.

Two or more aspects described in this disclosure, including those described in this summary section, may be combined to form implementations not specifically described herein. That is, all embodiments described herein can be combined with each other.

The details of one or more implementations are set forth in the accompanying drawings and the description below. Other features, objects and advantages will be apparent from the description and drawings, and from the claims.

### BRIEF DESCRIPTION OF THE DRAWINGS

These and other features of this disclosure will be more readily understood from the following detailed description of the various aspects of the disclosure taken in conjunction with the accompanying drawings that depict various embodiments of the disclosure, in which:
FIG. 1 shows a schematic block diagram of an illustrative additive manufacturing system for additively manufacturing using a build platform according to embodiments of the disclosure;
FIG. 2A shows a cross-sectional view of a build platform according to embodiments of the disclosure;
FIG. 3A shows a top-down view of a build platform according to other embodiments of the disclosure;

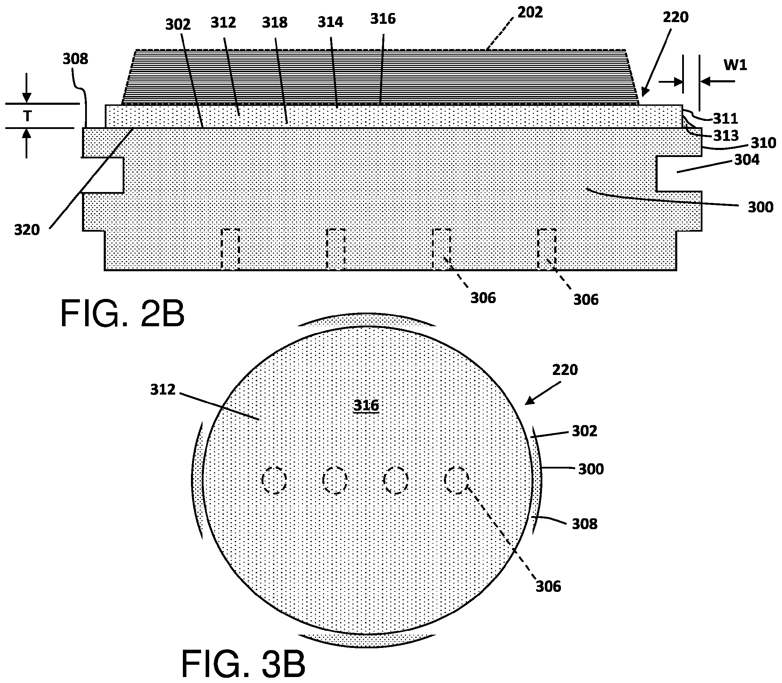

FIG. 2B shows a cross-sectional view of a build platform according to other embodiments of the disclosure;
FIG. 3B shows a top-down view of a build platform according to embodiments of the disclosure;

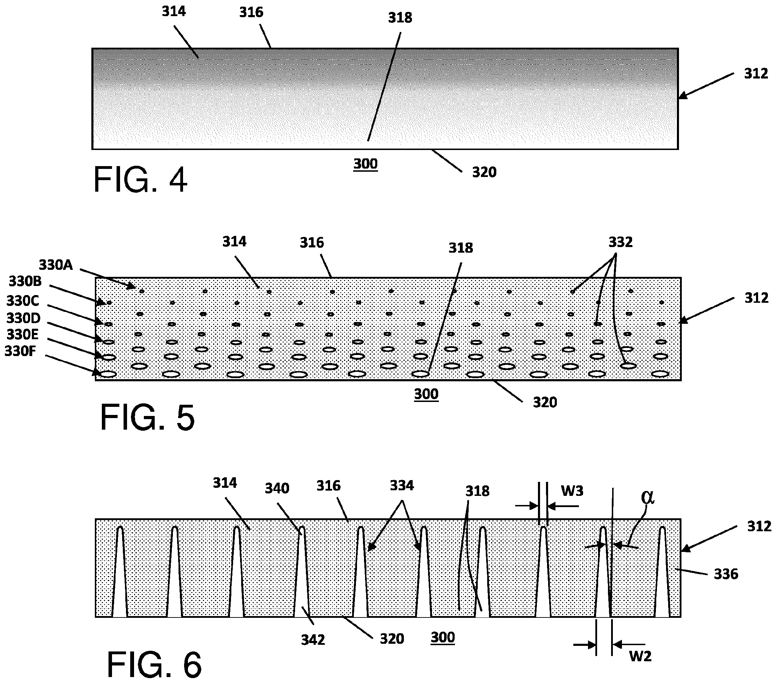

FIG. 4 shows a cross-sectional view of a surface layer of a build platform according to embodiments of the disclosure;
FIG. 5 shows a cross-sectional view of a surface layer of a build platform according to other embodiments of the disclosure; and
FIG. 6 shows a cross-sectional view of a surface layer of a build platform according to additional embodiments of the disclosure.

It is noted that the drawings of the disclosure are not necessarily to scale. The drawings are intended to depict only typical aspects of the disclosure and therefore should not be considered as limiting the scope of the disclosure. In the drawings, like numbering represents like elements between the drawings.

### DETAILED DESCRIPTION

As an initial matter, in order to clearly describe the current disclosure, it will become necessary to select certain terminology when referring to and describing relevant machine components within the illustrative application of an additive manufacturing system. When doing this, if possible, common industry terminology will be used and employed in a manner consistent with its accepted meaning. Unless otherwise stated, such terminology should be given a broad interpretation consistent with the context of the present application and the scope of the appended claims. Those of ordinary skill in the art will appreciate that often a particular component may be referred to using several different or overlapping terms. What may be described herein as being a single part may include and be referenced in another context as consisting of multiple components. Alternatively, what may be described herein as including multiple components may be referred to elsewhere as a single part.

In addition, several descriptive terms may be used regularly herein, and it should prove helpful to define these terms at the onset of this section. These terms and their definitions, unless stated otherwise, are as follows. The terms "first," "second," and "third," may be used interchangeably to distinguish one component from another and are not intended to signify location or importance of the individual components.

The terminology used herein is for the purpose of describing particular embodiments only and is not intended to be limiting of the disclosure. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. "Optional" or "optionally" means that the subsequently described event may or may not occur or that the subsequently described feature may or may not be present and that the description includes instances where the event occurs, or the feature is present and instances where the event does not occur, or the feature is not present.

Where an element or layer is referred to as being "on," "engaged to," "connected to," "coupled to," or "mounted to" another element or layer, it may be directly on, engaged, connected, coupled, or mounted to the other element or layer, or intervening elements or layers may be present. In contrast, when an element is referred to as being "directly on," "directly engaged to," "directly connected to," or "directly coupled to" another element or layer, there are no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items. The verb forms of "couple" and "mount" may be used interchangeably herein.

As indicated above, the disclosure provides a build platform for a metal additive manufacturing (AM) process and a related method. The build platform includes a base including a first metal and an upper surface. The build platform also includes a surface layer on the upper surface of the base including a second metal different than the first metal. The surface layer has a graded porosity having a most-dense region at an upper surface of the surface layer and a least-dense region at a lower surface of the surface layer. The lower surface of the surface layer contacts the upper surface of the base. Hence, embodiments of the disclosure provide a bi-metallic build platform where the base is made of a first metal, such as, carbon steel, and only the top surface layer that bonds to the print material is made from a second metal compatible with the print material. The bi-metallic build platform provides a system compatible with the print material in terms of adhesion strength and relative to CTE. Hence, the build platform removes concerns regarding the noted build failures, even at elevated temperatures. In addition, the build platform is less expensive to make than one made wholly of material compatible with the print material.

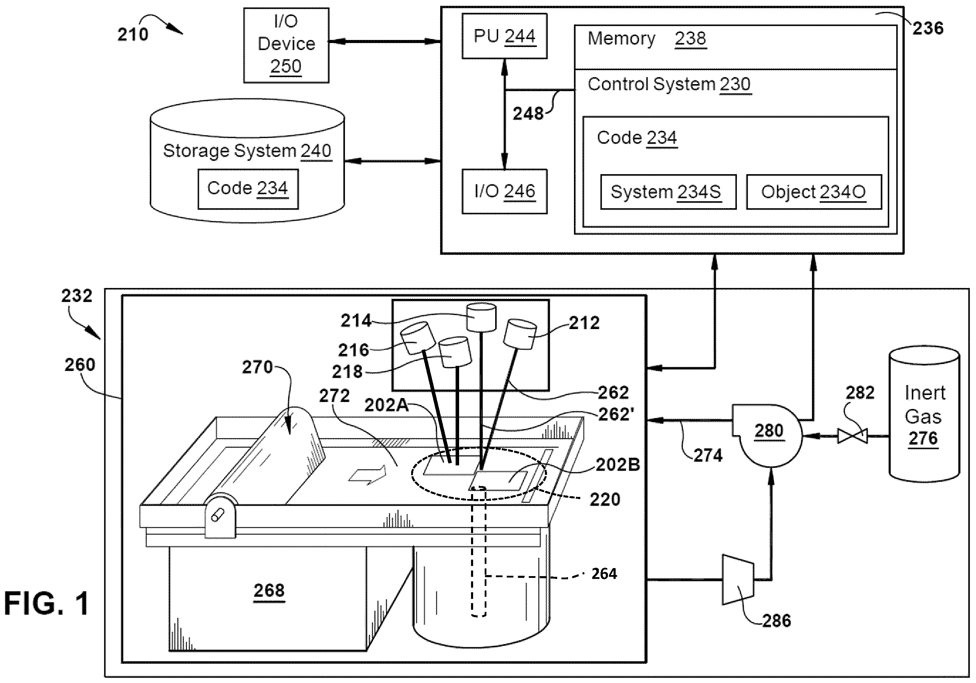

FIG. 1 shows a schematic/block view of an illustrative computerized metal powder additive manufacturing system 210 (hereinafter "AM system 210") using a build platform 220 for generating a part 202. A single layer of part 202 is shown. Build platform 220 is shown with dashed lines as it would be under a layer of print material 272. As will be described further herein, AM system 210 may use build platform 220 according to embodiments of the disclosure. AM system 210 will be described relative to building one or more parts 202A, 202B using multiple melting beam sources 212, 214, 216, 218, but it is emphasized and will be readily recognized that the teachings of the disclosure are equally applicable to build one or more parts 202 using any number of melting beam sources. In this example, AM system 210 is arranged for direct metal laser melting (DMLM). It is understood that the general teachings of the disclosure are equally applicable to other forms of metal powder additive manufacturing such as but not limited to powder bed fusion, direct metal laser sintering (DMLS), electron beam melting (EBM), selective laser sintering (SLS), selective laser melting (SLM), and perhaps other forms of additive manufacturing (i.e., other than metal powder applications). Parts 202A, 202B are illustrated as rectangular elements; however, it is understood that the additive manufacturing process can be readily adapted to manufacture any shaped part, a large variety of distinct parts, and a large number of parts on build platform 220.

AM system 210 generally includes an additive manufacturing control system 230 ("control system") and an AM printer 232. As will be described, control system 230 executes set of computer-executable instructions or code 234 to generate part(s) 202 using multiple melting beam sources 212, 214, 216, 218. In the example shown, four melting beam sources 212, 214, 216, 218 may include four lasers. However, the teachings of the disclosures are applicable to any melting beam source, e.g., an electron beam, laser, etc. Control system 230 is shown implemented on computer 236 as computer program code. To this extent, computer 236 is shown including a memory 238 and/or storage system 240, a processor unit (PU) 244, an input/output (I/O) interface 246, and a bus 248. Further, computer 236 is shown in communication with an external I/O device/resource 250. In general, processor unit (PU) 244 executes computer program code 234 that is stored in memory 238 and/or storage system 240. While executing computer program code 234, processor unit (PU) 244 can read and/or write data to/from memory 238, storage system 240, I/O device 250 and/or AM printer 232. Bus 248 provides a communication link between each of the components in computer 236, and I/O device 250 can comprise any device that enables a user to interact with computer 236 (e.g., keyboard, pointing device, display, etc.). Computer 236 is only representative of various possible combinations of hardware and software. For example, processor unit (PU) 244 may comprise a single processing unit or be distributed across one or more processing units in one or more locations, e.g., on a client and server. Similarly, memory 238 and/or storage system 240 may reside at one or more physical locations. Memory 238 and/or storage system 240 can comprise any combination of various types of non-transitory computer readable storage medium including magnetic media, optical media, random access memory (RAM), read only memory (ROM), etc. Computer 236 can comprise any type of computing device such as an industrial controller, a network server, a desktop computer, a laptop, a handheld device, etc.

As noted, AM system 210 and, in particular control system 230, executes code 234 to generate, among other things, metal part(s) 202. Code 234 can include, among other things, a set of computer-executable instructions 234S (herein also referred to as 'code 234S') for operating AM printer 232, and a set of computer-executable instructions 234O (herein also referred to as 'code 234O') defining metal part(s) 202 to be physically generated by AM printer 232. As described herein, additive manufacturing processes begin with a non-transitory computer readable storage medium (e.g., memory 238, storage system 240, etc.) storing code 234. Set of computer-executable instructions 234S for operating AM printer 232 may include any now known or later developed software code capable of operating AM printer 232.

The set of computer-executable instructions 234O defining metal part(s) 202 may include a precisely defined 3D model of a part and can be generated from any of a large variety of well-known computer aided design (CAD) software systems such as AutoCAD^{®}, TurboCAD^{®}, DesignCAD 3D Max, etc. In this regard, code 234O can include any now known or later developed file format. Furthermore, code 234O representative of metal part(s) 202 may be translated between different formats. For example, code 234O may include Standard Tessellation Language (STL) files which was created for stereolithography CAD programs of 3D Systems, or an additive manufacturing file (AMF), which is an American Society of Mechanical Engineers (ASME) standard that is an extensible markup-language (XML) based format designed to allow any CAD software to describe the shape and composition of any three-dimensional object to be fabricated on any AM printer. Code 234O representative of metal part(s) 202 may also be converted into a set of data signals and transmitted, received as a set of data signals and converted to code, stored, etc., as necessary. Code 234O may be configured according to embodiments of the disclosure to allow for formation of border and internal sections in overlapping field regions, as will be described. In any event, code 234O may be an input to AM system 210 and may come from a part designer, an intellectual property (IP) provider, a design company, the operator or owner of AM system 210, or from other sources. In any event, control system 230 executes code 234S and 234O, dividing metal part(s) 202 into a series of thin slices that assembles using AM printer 232 in successive layers of material. As will be described herein, apart from building part(s) 202 and perhaps using a different print material 272 than used for part(s) 202, control system 230 may also execute code 234S and 234O, dividing surface layer 312 for build platform 220 into a series of thin slices that assembles using AM printer 232 in successive layers of material on base 300 of build platform 220.

AM printer 232 may include a processing chamber 260 that is sealed to provide a controlled atmosphere for metal part(s) 202 printing. Build platform 220, upon which metal part(s) 202 is/are built, is positioned within processing chamber 260. A number of melting beam sources 212, 214, 216, 218 are configured to melt layers of metal powder on build platform 220 to generate part(s) 202. While four melting beam sources 212, 214, 216, 218 are illustrated, it is emphasized that the teachings of the disclosure are applicable to a system employing any number of sources, e.g., 1, 2, 3, or 5 or more. As understood in the field, each melting beam source 212, 214, 216, 218 may have a field including a non-overlapping field region, respectively, in which it can exclusively melt metal powder, and may include at least one overlapping field region in which two or more sources can melt metal powder. In this regard, each melting beam source 212, 214, 216, 218 may generate a melting beam, respectively, that fuses particles for each slice, as defined by code 234O. For example, in FIG. 1, melting beam source 212 is shown creating a layer of metal part(s) 202 using melting beam 262 in one region, while melting beam source 214 is shown creating a layer of metal part(s) 202 using melting beam 262' in another region. Each melting beam source 212, 214, 216, 218 is calibrated in any now known or later developed manner. That is, each melting beam source 212, 214, 216, 218 has had its laser or electron beam's anticipated position relative to build platform 220 correlated with its actual position in order to provide an individual position correction (not shown) to ensure its individual accuracy. In one embodiment, each of plurality melting beam sources 212, 214, 216, 218 may create melting beams, e.g., 262, 262', having the same cross-sectional dimensions (e.g., shape and size in operation), power and/or scan speed.

Continuing with FIG. 1, an applicator (or re-coater blade) 270 may create a thin layer of raw print material 272 (from a print material supply chamber 268) spread out as the blank canvas from which each successive slice of the final part will be created, i.e., over build platform 220. Various parts of AM printer 232 may move to accommodate the addition of each new layer, e.g., build platform 220 may lower and/or processing chamber 260 using an actuator system 264 and/or applicator 270 may rise after each layer. Any form of actuator system 264 can be used to move build platform 220 and/or other parts of AM printer 232. The process may use different print materials 272 in the form of fine-grain metal powder, a stock of which may be held in print material supply chamber 268 accessible by applicator 270. In the instant case, part(s) 202 may be made of a metal which may include a pure metal or an alloy. In one example, the metal may include practically any non-reactive metal powder, i.e., non-explosive powder, such as but not limited to: a cobalt chromium molybdenum (CoCrMo) alloy, stainless steel, an austenite nickel-chromium based alloy such as a nickel-chromium-molybdenum-niobium alloy (NiCrMoNb) (e.g., Inconel 625 or Inconel 718), a nickel-chromium-iron-molybdenum alloy (NiCrFeMo) (e.g., Hastelloy^{®} X available from Haynes International, Inc.), or a nickel-chromium-cobalt-molybdenum alloy (NiCrCoMo) (e.g., Haynes 282 available from Haynes International, Inc.). Other possibilities include, for example, René 108, CM 247, Mar M 247 and any precipitation harden-able (PH) nickel alloy. As will be described herein, build platform 220 is configured to address compatibility of any print material 272 used.

Processing chamber 260 is filled with an inert gas such as argon or nitrogen and controlled to minimize or eliminate oxygen. Control system 230 is configured to control a flow of a gas mixture 274 within processing chamber 260 from a source of inert gas 276. In this case, control system 230 may control a pump 280, and/or a flow valve system 282 for inert gas to control the content of gas mixture 274. Flow valve system 282 may include one or more computer controllable valves, flow sensors, temperature sensors, pressure sensors, etc., capable of precisely controlling flow of the particular gas. Pump 280 may be provided with or without valve system 282. Where pump 280 is omitted, inert gas may simply enter a conduit or manifold before being introduced to processing chamber 260. Source of inert gas 276 may take the form of any conventional source for the material contained therein, e.g., a tank, reservoir or other source. Any sensors (not shown) required to measure gas mixture 274 may be provided. Gas mixture 274 may be filtered using a filter 286 in a conventional manner.

In operation, build platform 220 with raw material 272 metal powder thereon is provided within processing chamber 260, and control system 230 controls flow of gas mixture 274 within processing chamber 260 from source of inert gas 276. Control system 230 also controls AM printer 232, and in particular, applicator 270 and melting beam sources 212, 214, 216, 218 to sequentially melt layers of metal powder on build platform 220 to generate metal part(s) 202 according to embodiments of the disclosure. Metal part(s) 202 have a plurality of re-solidified metal layers therein when complete.

While a particular AM system 210 has been described herein, it is emphasized that the teachings of the disclosure are not limited to any particular additive manufacturing system or method.

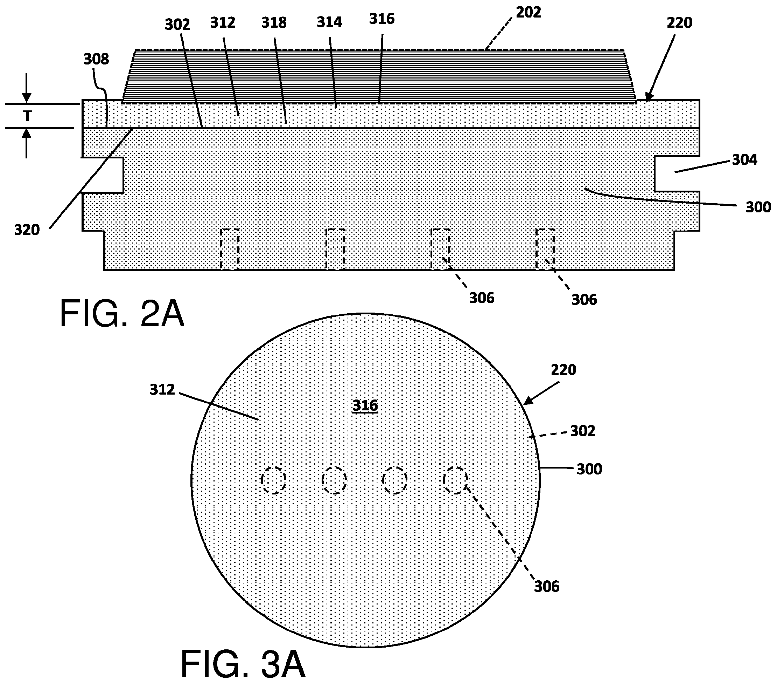

FIG. 2A shows a cross-sectional view of build platform 220, and FIG. 3A shows a top-down view of build platform 220 for a metal powder AM process, such as described previously herein. Build platform 220 includes a base 300 including a first metal and an upper surface 302. Base 300 may include any now known or later developed system for operatively coupling base 300 to AM system 210, e.g., within processing chamber 260. For example, base 300 may include one or more grooves 304 and/or openings 306 to which actuator system 264 (FIG. 1) of AM system 210 (FIG. 1) may couple. The first metal of base 300 may include a single metal chemical element such as but not limited to nickel (Ni), titanium (Ti), aluminum (Al) or copper (Cu). Alternatively, the first metal may include a metal alloy such as but not limited to a steel alloy or stainless steel.

As shown in FIG. 2A, build platform 220 also includes a surface layer 312 on upper surface 302 of base 300. Surface layer 312 has a thickness T of at least 0.2 millimeters. Surface layer 312 includes a second metal different than the first metal. The second metal of surface layer 312 may include a single metal chemical element or may include a metal alloy. In certain embodiments, the first metal of base 300 includes a single chemical element or an alloy and the second metal of surface layer 312 includes a different (metal) alloy of two or more chemical elements. In one example, the first metal includes a carbon steel and the second metal includes one of a stainless steel and a nickel-based alloy. A large variety of alternative first and second metals can also be used. In any event, the second metal of surface layer 312 is compatible to print material 272 (FIG. 1) used to build/print part(s) 202. For example, second metal of surface layer 312 wets and bonds with print material 272 to prevent peeling/cracking at the interface that would otherwise result in a build failure of part(s) 202. The second metal of surface layer 312 may also have a coefficient of thermal expansion (CTE) compatible with print material 272. That is, any difference in CTE between surface layer 312 and print material 272 is sufficiently small to prevent separation of the bond between print material 272 (FIG. 1) and build platform 220 even in high temperature additive manufacturing environments, e.g., higher than 150°C (~302°F).

In certain embodiments, as shown in FIGS. 2A and 3A, surface layer 312 may cover an entirety of upper surface 302 of base 300, i.e., so outer perimeter thereof is vertically aligned. As shown in FIGS. 2B and 3B, in other embodiments, surface layer 312 may cover upper surface 302 of base 300 except at an exposed portion 308 of upper surface 302 of base 300 surrounding surface layer 312. As shown in FIG. 2B, in certain embodiments, exposed portion 308 may have a width W1 in a range of 1.2 to 1.8 millimeters (on each side). In other embodiments, not shown, exposed portion 308 may include any radial difference between an outer perimeter 310 of base 300 and a footprint of print part 202. As shown on the right side of FIG. 2B only, surface layer 312 may be coupled to base 300 by a fillet 313. More particularly, a corner between a vertical sidewall 311 of surface layer 312 and exposed portion 308 of base 300 may include a fillet 313 to couple surface layer 312 and base 300 together. Fillet 313 may be formed with surface layer 312 and extend along any extent of surface layer 312, e.g., it may be continuous or intermittent. Fillet 313 includes the second metal, i.e., the same metal as surface layer 312. In any event, where provided, exposed portion 308 allows for some thermal expansion/contraction between surface layer 312 and base 300 of build platform 220.

Surface layer 312 also has a graded porosity having a most-dense region 314 at an upper surface 316 of surface layer 312, i.e., in or just below upper surface 316, and a least-dense region 318 at a lower surface 320 of surface layer 312, i.e., in or just above lower surface 320 (FIGS. 4-6). The graded porosity provides a solid or very dense upper surface 316 upon which to print part(s) 202 with sufficient wetting/bonding with print material 272 (FIG. 1) for part(s) 202, and a more flexible lower surface 320 at the interface with base 300 of build platform 220 to allow thermal expansion/contraction. As illustrated, lower surface 320 of surface layer 312 contacts upper surface 302 of base 300, i.e., they are in direct contact with no intervening material.

"Porosity," as used herein, is a ratio of open space volume to total volume of the stated structure, e.g., surface layer 312 or region thereof. Typically, in this regard, porosity is stated as a percentage of volume of open space to overall or total volume of the stated structure. For example, in certain embodiments, most-dense region 314 has a porosity in a range of 0% to 4.9% and least-dense region 318 has a porosity in a range of 5 to 25%. As noted, most-dense region 314 may also be considered solid, i.e., 0% porous. In some cases, the open space is empty areas in a solid material in the form "pores" 332 (see, e.g., FIG. 5), i.e., small, individual open spaces, which may include interconnecting passages in the material of the stated structure, e.g., three dimensional passages. In other cases, the open space is empty areas in a solid material in the form larger openings (see, e.g., FIG. 6) that may include elongated passages, such as open columns 334 (FIG. 6), in the material of the stated structure. A region that is porous in surface layer 312 is thus less than 100% solid and includes open spaces in the form of, for example, pores or other openings and/or interconnecting passages. Surface layer 312 may also include solid regions, but also include one or more porous regions that are less than 100% solid. As used herein, a three-dimensional boundary of a porous region or sub-region for purpose of identifying a "total volume" thereof can be identified by where a change in porosity of greater than 0.1% relative to an adjacent region or sub-region occurs within surface layer 312. "Open space volume" is collectively a three-dimensional space that is empty, i.e., a void, gap, empty space and/or not filled with material, within a region or sub-region. As used herein, "different porosities" or "differences in porosity," generally means any variety of characteristics such as: percentage of open space volume to total volume, a number of pores or other open space in a given volume, the volume (i.e., size) of pores or other open space, shape of pores or open space, and variations in connecting passages between pores or other open space that may not be recognized as actual discrete pores or open space. As one nonlimiting example only, pore size can be in a range of, for example, 1.715x10⁻⁵ to 6.542x10⁻² cubic millimeters (1.000x10⁻⁹ to 3.992x10⁻⁶ cubic inches). In certain embodiments, the pores can be spherical and can have a diameter in a range of 0.030 millimeters (mm) to 0.50 mm (0.0012 inches to 0.0197 inches). In certain embodiments, the pores have a diameter in a range of 0.028 to 0.036 millimeters (mm) below upper surface 316 of surface layer 312 and in a range of 1.8 to 2.2 mm adjacent lower surface 320 of surface layer 312, i.e., just above or into lower surface 320. Other shapes of porosity are also possible for graded porosity arrangements so long as the percentage and variation fall within the stated ranges. With differences in, for example, pore shape or pore connecting passages, it will be recognized that differences in porosity may not be exclusively based on percentage of open space volume to total volume. However, where differences in porosities are compared in terms of degree, e.g., higher or lower, the difference referenced is exclusively that of the volume characteristics, i.e., percentage of open space volume to total volume.

FIGS. 4-6 show cross-sectional views of various embodiments of surface layer 312. FIG. 4 shows graded porosity between upper surface 316 of surface layer 312 and lower surface 320 of surface layer 312 including a constant rate of porosity change from upper surface 316 of surface layer 312 to lower surface 320 of surface layer 312, i.e., contacting base 300. Here, the graded porosity changes may have a constant rate of porosity change from the upper surface 316 of surface layer 312 to lower surface 320 of surface layer 312 in a range of 1% to 4% per millimeter. FIG. 5 shows the graded porosity between upper surface 316 of surface layer 312 and lower surface 320 of surface layer 312 including a plurality of stepped-porosity layers 330A-F having pores 332 of stepped, different volumes from upper surface 316 of surface layer 312 to lower surface 320 of surface layer 312, i.e., contacting base 300. While six stepped-porosity layers 330A-F are shown, any number may be used. Pores 332 in each stepped porosity layer, e.g., 330F, are larger and/or more numerous than those in a stepped-porosity layer, e.g., 330E, thereabove. FIG. 6 shows the graded porosity between upper surface 316 of surface layer 312 and lower surface 320 of surface layer 312 including a plurality of open columns 334 in solid material 336. Plurality of open columns 334 extend from near upper surface 316 of surface layer 312 to lower surface 320 of surface layer 312. Each open column 334 has a narrower upper portion 340 adjacent but under upper surface 316 of surface layer 312 and a wider lower portion 342 adjacent lower surface 320 of surface layer 312, i.e., contacting base 300. A lower width W2 of open column 334, i.e., wider lower portion 342, at lower surface 320 of surface layer 312 may be in a range of, for example, 0.5-2.0 millimeters (mm). An upper width W3 of open column 334, i.e., of narrower upper portion 340, below upper surface 316 of surface layer 312 may be in a range of, for example, 0.05 to 0.3 mm. Open columns 334 may have a taper angle a in a range of, for example, 1-4°.

A method according to embodiments of the disclosure may include forming build platform 220 for AM process as described herein. The forming may include providing base 300 including the first metal and upper surface 302 and forming surface layer 312 on upper surface 302 of base 300. As noted, surface layer 312 includes the second metal different than the first metal. Further, surface layer 312 has the graded porosity having most-dense region 314 at upper surface 316 of surface layer 312 and least-dense region 318 at lower surface 320 of surface layer 312. As illustrated in FIGS. 2A and 2B, lower surface 320 of surface layer 312 contacts upper surface 302 of base 300. Surface layer 312 has thickness T of at least 0.2 millimeters.

Surface layer 312 can be formed in a number of different ways. As the different techniques listed herein are generally well known in the art, details of the techniques are mostly omitted unless otherwise necessary. Regardless of formation method, surface layer 312 exclusively includes the second metal as described herein.

In certain embodiments, forming surface layer 312 may include forming a solid layer apart from base 300, and then forming the graded porosity in the solid layer to form surface layer 312, and coupling the surface layer to the upper surface of the base. In this embodiment, surface layer 312 may first include a solid layer, which can then be made porous per the disclosure using any of a variety of techniques, such as but not limited to electric discharge machining (EDM), electrochemical machining (ECM) and/or shaped tube electric machining (STEM), or similar machining. The machining can be applied to one or both sides of the solid, pre-formed surface layer 312. Pre-formed surface layer 312 may then be coupled to base 300 using, for example, brazing, friction welding or fillet welding around the perimeter of surface layer 312.

In another approach according to this embodiment, forming surface layer 312 may include forming a solid layer on upper surface 302 of base 300 and then forming the graded porosity in the solid layer to form surface layer 312. Initially, the solid layer may be formed on base 300 using, for example, laser cladding or other joining method. Surface layer 312 can then be machined to create the porosity per the disclosure. For example, pre-formed surface layer 312 may be made porous per the disclosure using any of a variety of techniques, such as but not limited to electric discharge machining (EDM), electrochemical machining (ECM) and/or shaped tube electric machining (STEM), and/or similar machining.

In other embodiments, forming surface layer 312 may include providing a second metal powder bed and additive manufacturing surface layer 312 on upper surface 302 of base 300. That is, surface layer 312 can be formed using an AM system, the same as or similar to that described herein, but using print material 272 including the second metal having the needed porosit(ies) and gradation profile (in situ formed) that is different than print material 272 used to print part(s) 202.

Once formed, surface layer 312 can include any of the herein described second metals and forms of graded porosity. After surface layer 312 formation, any necessary heat treatments can be performed and build platform 220 can be machined to the desired dimensions and surface layer 312 finish.

Returning to FIGS. 1 and 2, embodiments of the method may further include additively manufacturing part(s) 202 on build platform 220 using print material 272. Once part(s) 202 are complete, they may be cut off from the bi-metal build plate along upper surface 316 of surface layer 312, i.e., surface layer 312 is not on the final part(s) 202.

The disclosure provides various technical and commercial advantages, examples of which are discussed herein. The bi-metallic build platform provides a system compatible with the print material in terms of bonding/welding thereto and relative to CTE. Hence, the build platform removes concerns regarding the noted build failures, even at elevated temperatures. In addition, the build platform is less expensive to make than one made wholly of material compatible with the print material. The teachings of the disclosure can be applied to any metal powder bed additive manufacturing process and/or AM system.

Approximating language, as used herein throughout the specification and claims, may be applied to modify any quantitative representation that could permissibly vary without resulting in a change in the basic function to which it is related. Accordingly, a value modified by a term or terms, such as "about," "approximately" and "substantially," are not to be limited to the precise value specified. In at least some instances, the approximating language may correspond to the precision of an instrument for measuring the value. Here and throughout the specification and claims, range limitations may be combined and/or interchanged; such ranges are identified and include all the sub-ranges contained therein unless context or language indicates otherwise. "Approximately" or "about," as applied to a particular value of a range, applies to both end values and, unless otherwise dependent on the precision of the instrument measuring the value, may indicate +/- 10% of the stated value(s).

The corresponding structures, materials, acts, and equivalents of all means or step plus function elements in the claims below are intended to include any structure, material, or act for performing the function in combination with other claimed elements as specifically claimed. The description of the present disclosure has been presented for purposes of illustration and description but is not intended to be exhaustive or limited to the disclosure in the form disclosed. Many modifications and variations will be apparent to those of ordinary skill in the art without departing from the scope and spirit of the disclosure. The embodiments were chosen and described in order to best explain the principles of the disclosure and the practical application and to enable others of ordinary skill in the art to understand the disclosure for various embodiments with various modifications as are suited to the particular use contemplated.

## Claims

1. A build platform for a metal additive manufacturing process, the build platform comprising:
a base including a first metal and an upper surface; and
a surface layer on the upper surface of the base, the surface layer including a second metal different than the first metal,
wherein the surface layer has a graded porosity having a most-dense region at an upper surface of the surface layer and a least-dense region at a lower surface of the surface layer, the lower surface of the surface layer contacting the upper surface of the base.

2. The build platform of claim 1, wherein the surface layer has a thickness of at least 0.2 millimeters.

3. The build platform of claim 1 or 2, wherein the surface layer covers the upper surface of the base except at an exposed portion of the upper surface surrounding the surface layer, the exposed portion having a width in a range of 1.2 to 1.8 millimeters.

4. The build platform of anyone of the preceding claims, wherein the most-dense region has a porosity in a range of 0% to 4.9% and the least-dense region has a porosity in a range of 5% to 25%.

5. The build platform of anyone of the preceding claims, wherein the first metal includes a single chemical element or an alloy and the second metal includes a different alloy of two or more chemical elements.

6. The build platform of anyone of the preceding claims, wherein the graded porosity between the upper surface of the surface layer and the lower surface of the surface layer includes a constant rate of porosity change from the upper surface of the surface layer to the lower surface of the surface layer in a range of 1% to 4% per millimeter.

7. The build platform of anyone of claims 1-5, wherein the graded porosity between the upper surface of the surface layer and the lower surface of the surface layer includes a plurality of stepped-porosity layers having pores of stepped, different volumes from the upper surface of the surface layer to the lower surface of the surface layer, wherein the pores have diameter in a range of 0.028 to 0.036 millimeters (mm) below the upper surface of the surface layer and in a range of 1.8 to 2.2 mm adjacent the lower surface of the surface layer.

8. The build platform of anyone of claims 1-5, wherein the graded porosity between the upper surface of the surface layer and the lower surface of the surface layer includes a plurality of open columns in solid material, the plurality of open columns extending from the upper surface of the surface layer to the lower surface of the surface layer, wherein each open column as a narrower upper portion adjacent but under the upper surface of the surface layer and a wider lower portion adjacent the lower surface of the surface layer.

9. The build platform of claim 8, wherein each open column has a lower width at the lower surface of the surface layer in a range of 0.5-2.0 millimeters (mm), an upper width below the upper surface of the surface layer in a range of 0.05 to 0.3 mm, and a taper angle in a range of 1-4°.

10. The build platform of anyone of the preceding claims, further comprising a fillet coupling the surface layer to the base, the fillet including the second metal.

11. A method, comprising:
forming a build platform for an additive manufacturing process by:
providing a base including a first metal and an upper surface; and
forming a surface layer on the upper surface of the base, the surface layer including a second metal different than the first metal,
wherein the surface layer has a graded porosity having a most-dense region at an upper surface of the surface layer and a least-dense region at a lower surface of the surface layer, the lower surface of the surface layer contacting the upper surface of the base,
wherein the surface layer has a thickness of at least 0.2 millimeters.

12. The method of claim 11, wherein forming the surface layer includes forming a solid layer apart from the base, forming the graded porosity in the solid layer to form the surface layer, and coupling the surface layer to the upper surface of the base.

13. The method of claim 12, wherein the coupling includes brazing, friction welding or fillet welding, around a perimeter of the surface layer.

14. The method of claim 11, wherein forming the surface layer includes forming a solid layer on the upper surface of the base and forming the graded porosity in the solid layer to form the surface layer;
wherein forming the graded porosity preferably includes at least one of electric discharge machining (EDM), electrochemical machining (ECM) and shaped tube electric machining (STEM), the solid layer.

15. The method of claim 11, wherein forming the surface layer includes second metal powder bed additive manufacturing the surface layer on the upper surface of the base.
